# EUROPÄISCHE PATENTANMELDUNG

(11) **EP 4 837 404 A1**
(43) Veröffentlichungstag der Anmeldung: **11.11.2026**
(21) Anmeldenummer: 26176230.6
(22) Anmeldetag: 04.05.2026
(51) Int. Cl.: A01C 17/00

(54) **POSITIONIERUNGSHILFE UND SYSTEM ZUM RELATIVEN POSITIONIEREN MINDESTENS EINER MESSEINRICHTUNG FÜR STREUGUT, MESSEINRICHTUNG ZUR ERFASSUNG VON AUSGEBRACHTEM STREUGUT**

(30) Priorität: 06.05.2025 DE 102025117327
(71) Anmelder: Amazonen-Werke H. Dreyer SE & Co. KG, 49205 Hasbergen (DE)
(72) Erfinder: Pawlak, Kevin, 49205 Hasbergen-Gaste (DE)

(57) **Zusammenfassung**

Die Offenlegungsschrift betrifft eine Positionierungshilfe (1) zum relativen Positionieren mindestens einer Messeinrichtung (30) für Streugut auf einem Feldboden (F) mit einer Projektionsvorrichtung (2) zum Erzeugen mindestens einer optischen Markierung (3, 4, 5, 6) für eine Messeinrichtung (30) auf einem Feldboden (F).

Ferner betrifft die Offenlegungsschrift eine Messeinrichtung (30) zur Erfassung von ausgebrachtem Streugut z. B. einer landwirtschaftlichen Maschine (20) und ein System zum relativen Positionieren mindestens einer Messeinrichtung (30) für Streugut.

## Beschreibung

Die Erfindung betrifft eine Positionierungshilfe zum relativen Positionieren mindestens einer Messeinrichtung für Streugut auf einem Feldboden und eine Messeinrichtung zur Erfassung von ausgebrachtem Streugut. Ferner betrifft die Erfindung eine landwirtschaftliche Maschine sowie ein System zum relativen Positionieren mindestens einer Messeinrichtung für Streugut auf einem Feldboden.

Üblicherweise werden bei der korrekten Einstellung der Streumenge, z. B. bei Streumaschinen und vor dem Streuen, Messreihen von Messeinrichtungen, wie z. B. Auffangmatten oder -schalen für Streugut, auf einem Feldboden ausgelegt. Zu deren korrekter Platzierung bedarf es neben der Berücksichtigung der Arbeitsbreite des verwendeten Streuers auch der Verwendung eines Maßbandes, um die Messeinrichtungen an den korrekten Orten und in den richtigen Abständen zueinander und/oder zu der Streumaschine auf einem Feldboden abzulegen. Diese Vorgehensweise ist fehleranfällig.

Daher ist es Aufgabe der vorliegenden Erfindung, eine Positionierungshilfe zum relativen Positionieren mindestens einer Messeinrichtung für Streugut auf einem Feldboden und eine Messeinrichtung zur Erfassung von ausgebrachtem Streugut anzugeben, welche kostengünstig herstellbar ist sowie ein einfaches und korrektes Positionieren von Messeinrichtungen auf einem Feldboden gewährleistet. Die gleiche Aufgabe liegt einem System zum relativen Positionieren mindestens einer Messeinrichtung für Streugut auf einem Feldboden zugrunde.

Diese Aufgaben werden durch die Merkmale der unabhängigen Ansprüche gelöst. Weitere vorteilhafte Weiterbildungen sind Gegenstand der Unteransprüche.

Ein erster Aspekt der vorliegenden Erfindung umfasst eine Positionierungshilfe zum relativen Positionieren mindestens einer Messeinrichtung für Streugut auf einem Feldboden. Dabei kann die Positionierungshilfe nicht nur zum relativen Positionieren mindestens einer Messeinrichtung für Streugut auf einem Feldboden dienen, sondern auch zur Einstellung einer landwirtschaftlichen Maschine, wie z. B. einer Streumaschine.

Dabei weist die Positionierungshilfe eine Projektionsvorrichtung zum Erzeugen mindestens einer optischen Markierung für eine Messeinrichtung bzw. für eine Position einer Messeinrichtung auf einem Feldboden auf. Dies erlaubt es einem Landwirt eine Messeinrichtung entsprechend der optischen Markierung auf einem Feld bzw. auf einem Feldboden korrekt abzulegen bzw. korrekt zu platzieren. Ein solches Vorgehen kann z. B. zur korrekten Einstellung einer landwirtschaftlichen Maschine, wie z. B. einer Streumaschine, sinnvoll sein. Zudem kann die Projektionsvorrichtung in der Lage sein, mindestens zwei Reihen von optischen Markierungen auf dem Feldboden zu erzeugen.

Die Projektionsvorrichtung kann mindestens eine Erzeugungseinrichtung für die mindestens eine optische Markierung aufweisen. Dabei kann die mindestens eine Erzeugungseinrichtung einen Laser oder eine Lichterzeugungseinheit umfassen. Bei einer Lichterzeugungseinheit kann es sich beispielsweise um eine besondere Lichtquelle handeln, deren Leistung ausreichend ist, eine optische Markierung zu erzeugen und/oder die kein Laserlicht dafür benötigt. Eine ausreichende Leistung ist vor allem bei starker Sonneneinstrahlung wichtig, damit die erzeugte Markierung gut erkennbar ist.

Zudem kann die Projektionsvorrichtung und/oder deren mindestens eine Erzeugungseinrichtung eingerichtet und ausgebildet sein, mindestens eine Linie, z. B. quer und/oder längs zu einer Fahrtrichtung einer landwirtschaftlichen Maschine, wie z. B. einer Streumaschine, und/oder zu einer Fahrgasse auf einem Feldboden zu erzeugen. Zusätzlich oder alternativ kann die Projektionsvorrichtung und/oder deren mindestens eine Erzeugungseinrichtung eingerichtet und ausgebildet sein, mindestens einen Umriss für eine Messeinrichtung, wie z. B. für eine Auffangeinrichtung für Streugut oder wie z. B. für eine Auffangschale für Streugut, auf einem Feldboden zu erzeugen. Die mindestens eine Linie und/oder der mindestens eine Umriss zeigen einem Landwirt den exakten Ort für die Anordnung einer Messeinrichtung an, sodass bestmögliche Messergebnisse erzielbar sind.

Des Weiteren kann die Positionierungshilfe ein Gestell aufweisen, an welchem die Projektionsvorrichtung für die mindestens eine optische Markierung befestigbar ist und/oder welches an einer landwirtschaftlichen Maschine, wie z. B. einer Streumaschine, befestigbar ist. Das Gestell kann eingerichtet und ausgebildet sein, unterschiedliche Positionen und/oder Winkel mindestens einer Erzeugungseinrichtung der Projektionsvorrichtung für verschiedene Arbeitsbreiten von landwirtschaftlichen Maschinen, wie z. B. Streumaschinen, vorzugeben und diese positionstreu zu halten. Somit ist die Positionierungshilfe für unterschiedliche Maschine mit unterschiedlichen Arbeitsbreiten einsetzbar.

Die landwirtschaftliche Maschine kann Aussparungen aufweisen, in die die Positionierungshilfe und/oder das Gestell eingesetzt werden kann. Auf diese Weise ist ein sicheres, reproduzierbares Ausrichten der Positionierungshilfe und/oder der Projektionsvorrichtung erreichbar.

Außerdem kann vorgesehen sein, dass die Positionierungshilfe mindestens eine Positions- und/oder Lageerfassungseinrichtung umfasst, mit welcher mindestens eine GNSS-Position der Projektionsvorrichtung und/oder die Lage der Projektionsvorrichtung im Raum erfassbar ist.

Bei einer GNSS-Position kann es sich um eine Position oder um Koordinaten handeln, die mittels eines globalen Navigationssatellitensystems (englisch: global navigation satellite system) bzw. mittels GNSS ermittelt werden oder wurden. Dabei kann GNSS als Sammelbegriff für Satellitensysteme GPS, Glonass, Galileo, Beidou usw. verstanden werden.

Ferner kann die mindestens eine Positions- und/oder Lageerfassungseinrichtung zwei GNSS-Sensoren umfassen, um die GNSS-Position der Projektionsvorrichtung und/oder deren Lage bzw. Ausrichtung im Raum zu erfassen. Dabei können die zwei GNSS-Sensoren voneinander beabstandet sein. Zudem können die zwei GNSS-Sensoren miteinander elektrisch verbunden sein, um Energie und/oder Informationen zu übertragen und/oder zu senden und/oder zu empfangen.

Des Weiteren kann die mindestens eine Positions- und/oder Lageerfassungseinrichtung eine Speichereinrichtung umfassen, in welcher die Position der zumindest einen optischen Markierung für eine Messeinrichtung und/oder räumliche Beziehungen zwischen mindestens einer optischen Markierung für eine Messeinrichtung auf einem Feldboden und einer virtuellen Verbindungslinie, die die zwei GNSS-Positionen der Projektionsvorrichtung verbindet, hinterlegt sind. Somit kann die GNSS-Position und/oder der Verlauf der mindestens einen optischen Markierung auf einem Feldboden, von z. B. einer Recheneinrichtung, errechenbar sein oder errechnet werden.

Ein zweiter Aspekt der vorliegenden Erfindung umfasst eine Messeinrichtung zur Erfassung von ausgebrachtem Streugut z. B. einer landwirtschaftlichen Maschine.

Es wird ausdrücklich darauf hingewiesen, dass die Merkmale der Positionierungshilfe, wie sie unter dem ersten Aspekt erwähnt werden, einzeln oder miteinander kombinierbar bei der Messeinrichtung Anwendung finden können.

Anders ausgedrückt, die oben unter dem ersten Aspekt der Erfindung genannten Merkmale betreffend die Positionierungshilfe können auch hier unter dem zweiten Aspekt der Erfindung mit weiteren Merkmalen kombiniert werden.

Eine Messeinrichtung zur Erfassung von ausgebrachtem Streugut z. B. einer landwirtschaftlichen Maschine, wie z. B. einer Streumaschine, weist mindestens eine Positionserfassungseinrichtung auf, mit welcher mindestens eine GNSS-Position der Messeinrichtung erfassbar ist.

Bei einer GNSS-Position kann es sich um eine Position oder um Koordinaten handeln, die mittels eines globalen Navigationssatellitensystems (englisch: global navigation satellite system) bzw. mittels GNSS ermittelt werden oder wurden. Dabei kann GNSS als Sammelbegriff für Satellitensysteme GPS, Glonass, Galileo, Beidou usw. verstanden werden.

Dabei kann die mindestens eine Positionserfassungseinrichtung einen GNSS-Sensor umfassen, um die GNSS-Position der Messeinrichtung zu erfassen.

Zudem kann die mindestens eine Positionserfassungseinrichtung und/oder deren GNSS-Sensor mit einer Positionierungshilfe zum relativen Positionieren mindestens einer Messeinrichtung für Streugut verbindbar sein, um wenigstens Positions-Informationen einer Messeinrichtung an die Positionierungshilfe zu übertragen und/oder zu senden. Die Verbindung beider kann drahtlos ausgeführt sein. Bei der Positionierungshilfe kann es sich um eine Positionierungshilfe nach dem ersten Aspekt der vorliegenden Erfindung handeln.

Ferner kann die Kombination aus der mindestens einen Positionserfassungseinrichtung und/oder aus deren GNSS-Sensor mit einer Positionierungshilfe zum relativen Positionieren mindestens einer Messeinrichtung für Streugut nach dem ersten Aspekt ähnlich einem RTK(Real-time kinematic positioning)-Aufbau nachgebildet sein. Bei einem einfachen RTK-Aufbau werden zwei GNSS-Empfänger benötigt. Der erste GNSS-Empfänger oder GNSS-Sensor kann die sog. Basis (Standort) oder Base Station als Referenzstation mit einer bekannten Koordinate bilden. Aus dieser festen Position kann die jeweilige Abweichung von Satellitendaten ermittelt und laufend korrigierte Daten übertragen werden. Der zweite GNSS-Empfänger oder GNSS-Sensor kann den sog. der Rover (Läufer) bilden, der beispielsweise seine Position mithilfe von Korrekturdaten durch dreidimensionales polares Anhängen an die Referenzstation nach dem Basislinienverfahren selbst bestimmt.

Außerdem kann die Messeinrichtung eine Auffangeinrichtung, wie z. B. eine Auffangmatte, für Streugut oder eine Auffangschale für Streugut auf einem Feldboden umfassen.

Ein dritter Aspekt der vorliegenden Erfindung umfasst ein System zum relativen Positionieren mindestens einer Messeinrichtung für Streugut.

Es wird ausdrücklich darauf hingewiesen, dass die Merkmale der Positionierungshilfe, wie sie unter dem ersten Aspekt erwähnt werden, und/oder die Merkmale der Messeinrichtung, wie sie unter dem zweiten Aspekt erwähnt werden, einzeln oder miteinander kombinierbar bei dem System Anwendung finden können.

Anders ausgedrückt, die oben unter dem ersten und/oder zweiten Aspekt der Erfindung genannten Merkmale können auch hier unter dem dritten Aspekt der Erfindung mit weiteren Merkmalen kombiniert werden.

Ein System zum relativen Positionieren mindestens einer Messeinrichtung für Streugut auf einem Feldboden umfasst mindestens eine Positionierungshilfe nach dem ersten Aspekt.

Ferner umfasst das System mindestens eine Messeinrichtung zur Erfassung von ausgebrachtem Streugut einer landwirtschaftlichen Maschine, wie z. B. einer Streumaschine mit Streuscheiben, auf einem Feldboden nach dem zweiten Aspekt.

Nachfolgend wird der oben dargestellte Erfindungsgedanke nochmals und ergänzend mit anderen Worten ausgedrückt.

Dieser Gedanke betrifft - vereinfacht dargestellt - eine Positionierungshilfe oder einen Magnetlaser, die/der an z. B. an einen Behälter einer landwirtschaftlichen Maschine befestigt wird.

Auch können mehrere Laser oder Laserleuchten (je nach Messpunkten auf einem Feld) in bestimmten Winkeln einstellt werden, sodass von den Lasern erzeugte Messlinien oder Umrisse auf einem Feld zum Auslegen von Auffangeinrichtungen, wie z. B. von Auffangmatten oder -schalen, angezeigt werden.

Nachstehend wird die Erfindung anhand eines Ausführungsbeispiels in Verbindung mit der zugehörigen Zeichnung näher erläutert. Hierbei zeigt schematisch:

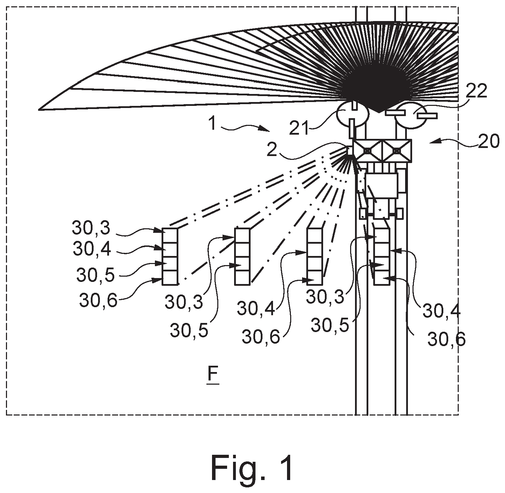

- **Fig. 1**: ein System zum relativen Positionieren von Messeinrichtungen für Streugut.

Figur 1 zeigt ein System zum relativen Positionieren von Messeinrichtungen 30 für Streugut.

Genauer dargestellt zeigt Figur 1 ein System zum relativen Positionieren mehrerer Messeinrichtungen 30 für Streugut, wobei das System eine Positionierungshilfe 1 und mehrere Messeinrichtungen 30 zur Erfassung von ausgebrachtem Streugut von einer landwirtschaftlichen Maschine 20, wie z. B. einer Streumaschine 20 mit Streuscheiben 21, 22, auf einem Feldboden umfasst.

Dabei dient die Positionierungshilfe 1 zum relativen Positionieren der Messeinrichtungen 30 für Streugut auf einem Feldboden und zur Einstellung der landwirtschaftlichen Maschine 20.

Hierbei umfasst die Positionierungshilfe 1 eine Projektionsvorrichtung 2 zum Erzeugen optischer Markierungen 3, 4, 5, 6 für je eine Messeinrichtung 30 auf einem Feldboden F. Dabei ist die Projektionsvorrichtung 2 in der Lage, mehrere Reihen von optischen Markierung 3, 4, 5, 6 auf dem Feldboden F zu erzeugen.

Die Projektionsvorrichtung 2 umfasst mehrere Erzeugungseinrichtungen (nicht dargestellt) für die optischen Markierungen 3, 4, 5, 6, wobei jede Erzeugungseinrichtung einen Laser aufweist.

Dabei sind die Erzeugungseinrichtungen - wie in Figur 1 dargestellt - eingerichtet und ausgebildet, zumindest eine Linie oder einen Umriss für eine Messeinrichtung 30, wie z. B. für eine Auffangeinrichtung für Streugut ,wie z. B. für eine Auffangmatte oder - schale für Streugut, auf dem Feldboden F zu erzeugen.

Zudem hat die Positionierungshilfe 1 ein Gestell (nicht dargestellt), an welchem die Projektionsvorrichtung 2 für die optischen Markierungen 3, 4, 5, 6 befestigt ist und welches an der landwirtschaftlichen Maschine 20 befestigt ist.

Dabei ist das Gestell eingerichtet und ausgebildet, unterschiedliche Positionen und Winkel der Erzeugungseinrichtungen der Projektionsvorrichtung 2 für verschiedene Arbeitsbreiten von landwirtschaftlichen Maschinen 20 vorzugeben und diese positionstreu zu halten. Somit ist also die Positionierungshilfe 1 für landwirtschaftlichen Maschinen 20 mit unterschiedlichen Arbeitsbreiten einsetzbar.

Des Weiteren umfasst die Positionierungshilfe 1 eine Positions- und Lageerfassungseinrichtung (nicht dargestellt), mit welcher GNSS-Positionen der Projektionsvorrichtung 2 und die Lage der Projektionsvorrichtung 2 im Raum erfassbar sind.

Bei einer GNSS-Position handelt es sich um eine Position oder um Koordinaten, die mittels eines globalen Navigationssatellitensystems (englisch: global navigation satellite system) bzw. mittels GNSS ermittelt werden oder wurden. Dabei kann GNSS als Sammelbegriff für Satellitensysteme GPS, Glonass, Galileo, Beidou usw. verstanden werden.

Konkret hat die Positions- und Lageerfassungseinrichtung zwei GNSS-Sensoren (nicht dargestellt), um die GNSS-Position der Projektionsvorrichtung 2 und deren Lage im Raum zu erfassen. Dabei sind die zwei GNSS-Sensoren voneinander beabstandet und miteinander elektrisch verbunden, um Informationen zu übertragen bzw. zu senden und zu empfangen.

Des Weiteren hat die Positions- und Lageerfassungseinrichtung eine Speichereinrichtung (nicht dargestellt), in welcher die Position der zumindest einen optischen Markierung für eine Messeinrichtung 30 und/oder räumliche Beziehungen zwischen den optischen Markierungen 3, 4, 5, 6 für je eine Messeinrichtung 30 auf dem Feldboden F und einer virtuellen Verbindungslinie, die die zwei GNSS-Positionen der Projektionsvorrichtung 2 verbindet, hinterlegt sind. Somit können die GNSS-Positionen und der Verlauf der optischen Markierungen 3, 4, 5, 6 auf dem Feldboden F, von z. B. einer Recheneinrichtung, errechnet werden.

Alternativ weist die Messeinrichtung 30 zur Erfassung von ausgebrachtem Streugut einer landwirtschaftlichen Maschine 20 eine Positionserfassungseinrichtung auf, mit welcher eine GNSS-Position der Messeinrichtung 30 erfassbar ist.

Dabei hat jede Positionserfassungseinrichtung einen GNSS-Sensor, um die GNSS-Position einer Messeinrichtung 30 zu erfassen.

Zudem ist jede Positionserfassungseinrichtung bzw. deren GNSS-Sensor mit der Positionierungshilfe 1 verbunden, um die Positions-Informationen einer Messeinrichtung 30 an die Positionierungshilfe 1 zu übertragen bzw. zu senden. Die Verbindung beider ist drahtlos ausgeführt.

Konkret umfasst jede Messeinrichtung 30 eine Auffangeinrichtung, wie z. B. eine Auffangmatte oder -schale, für Streugut auf dem Feldboden F.

Das vorgestellte System gestattet es einem Landwirt die Messeinrichtungen 30 entsprechend der optischen Markierungen 3, 4, 5, 6 auf einem Feld bzw. auf einem Feldboden F korrekt abzulegen bzw. korrekt zu platzieren. Ein solches Vorgehen ist bei der korrekten Einstellung einer landwirtschaftlichen Maschine, wie z. B. einer Streumaschine, nützlich.

### Bezugszeichenliste

- 1: Positionierungshilfe
- 2: Projektionsvorrichtung
- 3: optische Markierung
- 4: optische Markierung
- 5: optische Markierung
- 6: optische Markierung

- 20: landwirtschaftliche Maschine / Streumaschine
- 21: Streuscheibe
- 22: Streuscheibe

- 30: Messeinrichtung

- F: Feldboden

## Patentansprüche

1. Positionierungshilfe (1) zum relativen Positionieren mindestens einer Messeinrichtung (30) für Streugut auf einem Feldboden (F) aufweisend:
eine Projektionsvorrichtung (2) zum Erzeugen mindestens einer optischen Markierung (3, 4, 5, 6) für eine Messeinrichtung (30) auf einem Feldboden (F).

2. Positionierungshilfe nach Anspruch 1,
- wobei die Projektionsvorrichtung (2) mindestens eine Erzeugungseinrichtung für die mindestens eine optische Markierung (3, 4, 5, 6) aufweist,
und/oder
- wobei die mindestens eine Erzeugungseinrichtung einen Laser oder eine Lichterzeugungseinheit umfasst.

3. Positionierungshilfe nach Anspruch 1 oder 2,
- wobei die Projektionsvorrichtung (2) und/oder deren mindestens eine Erzeugungseinrichtung eingerichtet und ausgebildet ist, mindestens eine Linie und/oder mindestens einen Umriss für eine Messeinrichtung (30) auf einem Feldboden (F) zu erzeugen.

4. Positionierungshilfe nach einem der vorangehenden Ansprüche,
- wobei die Positionierungshilfe (1) ein Gestell aufweist, an welchem die Projektionsvorrichtung (2) für die mindestens eine optische Markierung (3, 4, 5, 6) befestigbar ist und/oder welches an einer landwirtschaftlichen Maschine (20) befestigbar ist, und
- wobei das Gestell eingerichtet und ausgebildet ist, unterschiedliche Positionen und/oder Winkel mindestens einer Erzeugungseinrichtung der Projektionsvorrichtung (2) für verschiedene Arbeitsbreiten von landwirtschaftlichen Maschinen (20), wie z. B. Streumaschinen (20), vorzugeben und diese positionstreu zu halten.

5. Positionierungshilfe nach einem der vorangehenden Ansprüche,
- wobei die Positionierungshilfe (1) mindestens eine Positions- und/oder Lageerfassungseinrichtung umfasst, mit welcher mindestens eine GNSS-Position der Projektionsvorrichtung (2) und/oder die Lage der Projektionsvorrichtung (2) im Raum erfassbar ist.

6. Landwirtschaftliche Maschine (2), insbesondere Streumaschine, umfassend eine Positionierungshilfe nach einem der vorstehenden Ansprüche.

7. Messeinrichtung (30) zur Erfassung von ausgebrachtem Streugut einer landwirtschaftlichen Maschine (20) aufweisend:
- mindestens eine Positionserfassungseinrichtung, mit welcher mindestens eine GNSS-Position der Messeinrichtung (30) erfassbar ist, und
- wobei die mindestens eine Positionserfassungseinrichtung und/oder deren GNSS-Sensor mit einer Positionierungshilfe (1) zum relativen Positionieren mindestens einer Messeinrichtung (30) für Streugut auf einem Feldboden (F) nach einem der vorangehenden Ansprüche verbindbar ist, um wenigstens Positions-Informationen einer Messeinrichtung (30) an die Positionierungshilfe (1) zu übertragen und/oder zu senden.

8. System zum relativen Positionieren mindestens einer Messeinrichtung (30) für Streugut auf einem Feldboden (F) aufweisend:
- mindestens eine Positionierungshilfe (1) nach einem der vorangehenden Ansprüche, und
- mindestens eine Messeinrichtung (30) zur Erfassung von ausgebrachtem Streugut einer landwirtschaftlichen Maschine (20) nach Anspruch 7.
